# EUROPÄISCHE PATENTANMELDUNG

(11) **EP 1 867 921 A1**
(43) Veröffentlichungstag der Anmeldung: **19.12.2007**
(21) Anmeldenummer: 05731683.8
(22) Anmeldetag: 24.03.2005
(51) Int. Cl.: F21V 33/00

(54) **LAMPENUHR**

(71) Anmelder: Beliyaev, Boris Vladimirovich, Moscow 117638 (RU); Bondareva, Emiliya Semenovna, Moscow 125239 (RU)
(72) Erfinder: Beliyaev, Boris Vladimirovich, Moscow 117638 (RU); Bondareva, Emiliya Semenovna, Moscow 125239 (RU)
(74) Vertreter: Jeck, Anton
(86) Internationale Anmeldenummer: PCT/RU2005/000134
(87) Internationale Veröffentlichungsnummer: WO 2006/101412

(57) **Zusammenfassung**

Es handelt sich um eine Uhr mit einem Leuchtkörper. Der Leuchtkörper weist einen Lampenschirm auf, auf dessen Umfang der Planet Erde dargestellt ist. Die Abbildung der Erde arbeitet mit dem Uhrwerk zusammen und übt eine Umdrehung pro Tag aus.

## Beschreibung

Die Erfindung betrifft ein Beleuchtungs- und Zeitmessgerät.

Das Ziel der Erfindung besteht darin, eine Uhr zu schaffen, bei der die Funktionen einer Leuchte sowie einer Uhr vorteilhaft vereinigt werden. Die Leuchte und die Uhr ermöglichen es, Informationen über die lokale Zeit, über den Stand des Tages und der Nacht (der Beleuchtung) auf jedem Ort unseres Planeten anzugeben. Der neue Gegenstand trägt zudem auch dazu bei, die ästhetische Erziehung des Verbrauchers zu beeinflussen.

Diese Aufgabe wird durch eine Uhr nach dem Anspruch 1 gelöst.

Weitere zweckmäßige Vorteile der Erfindung gehen aus den Unteransprüchen hervor Ein Vorteil der erfindungsgemäßen Uhr besteht auch in der Eigenartigkeit der Konstruktion sowie des Designs. Das stellt die technische und wirtschaftliche Konkurrenzfähigkeit der mechanischen Uhr sicher.

Der Vorteil der vorgeschlagenen Erfindung gegenüber elektrischen und elektronischen Uhren wird durch das Vorhandensein eines Uhrwerkes erreicht. Der Gang und die Anzeige der aktuellen Zeit werden bei Stromausfall nicht beeinträchtigt. Ein Vorteil der Erfindung in Bezug auf elektronische Uhren besteht darin, dass das Uhrwerk durch Funk gesteuert wird.

Die Erfindung weist keinen Gangfehler auf, was den hochgenauesten Uhren eigen ist, die autonom funktionieren.

Die vorgeschlagene Uhr hat einen Beleuchtungs- und Zierteil, in dem das Uhrwerk eingebaut ist.

Der beleuchtete Teil besteht aus einem durchsichtigen oder halbdurchsichtigen Lampenschirm mit verformter Abbildung der Ozeane, Seen, Flüsse, Kontinente, Länder, Inseln des Planeten Erde. Er kann als geographische und/oder als politische Weltkarte, als Sternkarte (1) dienen.

Der oben beschriebene Lampenschirm mit dem Uhrwerk (11) dreht sich mit der Geschwindigkeit von einer Umdrehung pro 24 Stunden um die Weltachse, so wie sie am Lampenschirm abgebildet ist. Die Kennzeichnung der Tag- und Nachtseite der Oberfläche der Erde, die auf der Oberfläche des Lampenschirms abgebildet ist, wird durch die Lage des Lampenschirms bezüglich des fixierten Blendeschilds sichergestellt. In der aktuellen Zeit entspricht die Lage der realen Beleuchtung der Oberfläche des Planeten Erde durch die Sonne.

Die lokale Uhrzeit auf dem Planeten Erde wird durch die Lage eines Punktes bestimmt, der auf der Karte der Erde mittels eines fixierten 24-Stunden-Zifferblatts (3) dargestellt wird.

Die Anzeige der lokalen Zeit während des Betriebes der Uhr ergibt sich aus der Lage des markierten Meridians in Bezug auf das Zifferblatt. Der Meridian bestimmt die lokale Länge und dient als Zeiger der Uhr.

Die Minutenanzeige ergibt sich aus der Stellung des Mitnehmers in Bezug auf das Zifferblatt. Auf dem Mitnehmer ist das Modell eines künstlichen Erdsatelliten befestigt. Der Mitnehmer dreht sich um den Lampenschirm mit der Geschwindigkeit von einer Umdrehung pro Stunde (13).

Das Uhrwerk umfasst ein traditionelles mechanisches Getriebe mit einer Übersetzung, die mit einem Pendel mittels eines Ankermechanismus zusammenarbeitet. Das Getriebe umfasst den Antrieb des Lampenschirms sowie des Mitnehmers mit dem Modell des künstlichen Erdsatelliten.

Das Getriebe arbeitet mit einer Arbeitsfeder (8) zusammen. Die Feder wird angezogen, was den Gang der Uhr innerhalb der 24 Stunden sicherstellt.

Der Aufzug der Feder auf den Arbeitswinkel erfolgt mittels eines mechanischen Getriebes mit Übersetzung ins Langsame (a, b, c, d, e, f) und einem Mikromotor, der von der Standardnetzspannung eingespeist wird.

Die Ein- und Ausschaltung des Mikromotors erfolgt durch einen Kontakt. Die geschlossene und offene Stellung des Kontakts wird durch die Winkel der Verdrehung der Arbeitsfeder bestimmt.

Die Korrektur und Einstellung der Uhr erfolgt durch eine Start- und Stoppeinrichtung, die vom Elektromagnet angetrieben wird. Die Einrichtung stellt einen Hebel-Riegel dar, der das mechanische Pendel während der Einspeisung des Elektromagnets sperrt und wieder frei macht, wenn der Elektromagnet wieder ohne Strom ist ("UW"). Die Oszillationsdauer des Pendels ist so eingestellt, dass der maximale Tagesfehler der Uhr innerhalb von 24 Stunden kompensiert wird.

In der Stellung des Mechanismus "00 Uhr 00 Minuten" der lokalen Zeit wird der Regelkontakt geschlossen, der den Elektromagnet des Riegels einspeist. Die Uhr hält an. Das Funkgerät wird eingeschaltet. Das Funkgerät ist auf den Sender abgestimmt, der die Signale des DEZ um "00 Uhr" der lokalen Zeit sendet.

Der Empfänger ist mit einem elektrischen Filter, der die Signale der genauen Zeit aussondert, und mit einem Verstärker ausgestattet. Der Verstärker setzt den Elektromagnet des Riegels nach dem letzten Signal stromlos, nachdem der Uhrgang wieder aufgenommen wird.

Die Instabilität des positiven Ganges der Uhr wird durch die veränderliche Zeit der Abstellung der Uhr kompensiert.

Diese Konstruktion ermöglicht es, dass um "00 Uhr" der Kontakt ausgelöst und die Arbeitsfeder aufgezogen wird. Die Konstruktion ermöglicht es ferner, den Winkel des Aufzuges für die Drehung über das Getriebe der Scheibe zu verwenden, auf dem die Wochentage (g, h, i, j) aufgetragen sind.

Der automatische Aufzug einmal am Tag ermöglicht es, den aktuellen Wochentag im Fenster anzuzeigen, bezüglich dessen sich die Scheibe (4) während des Aufzugs dreht.

### Bezugsziffer-Liste

1. Lampenschirm
2. Bewehrungsrohr
3. Uhrzifferblatt
4. Anzeige des Wochentags
5. Das mit dem Lampenschirm drehende Gehäuse
6. Motor
7. Federtrommel
8. Arbeitsfeder
9. Schraubenpaar des Antriebes des Endschalters
10. Endmikroschalter
11. Uhrwerk
12. Reibungskupplung
13. Modell des künstlichen Erdsatelliten
14. Lichtquellen a, b, c, d, e, f - Getriebezug des Aufzuges der Arbeitsfeder g, h, i, j - Getriebezug der Anzeige des Wochentags k, l - Zahnradgetriebe m, n - Verzahnung des Antriebes des Uhrwerks o, p - Zahnradgetriebe des Lampenschirms q, r - Zahnradgetriebe des Mitnehmers mit dem Modell des Erdsatelliten "UW" - Räderzug des Gangreglers des Uhrwerks

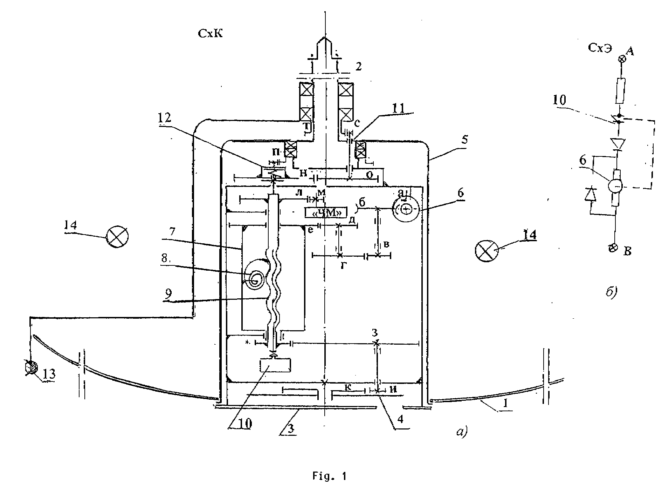

## Patentansprüche

1. Uhr mit einem Leuchtkörper,
**dadurch gekennzeichnet,**
**dass** der Leuchtkörper einen Lampenschirm aufweist, auf dessen Umfang der Planet Erde dargestellt ist, und dass die Abbildung der Erde mit dem Uhrwerk zusammenarbeitet und eine Umdrehung pro Tag ausübt.

2. Uhr nach Anspruch 1,
**dadurch gekennzeichnet,**
**dass** die Zeitangabe auf Grund der Position der Meridian-Grenze sowie des fixierten des 24-Stunden-Zifferblatts erfolgt.

3. Uhr nach Anspruch 1 oder 2,
**dadurch gekennzeichnet,**
**dass** die Minutenanzeige durch den Mitnehmer eines befestigten Modells des künstlichen Erdsatelliten erfolgt.

4. Uhr nach einem der Ansprüche nach Anspruch 1 bis 3,
**dadurch gekennzeichnet,**
**dass** die reale, aktuelle Beleuchtung der Oberfläche der Erde durch die Sonne sowie einen fixierten Schild bestimmt wird, der eine unterschiedliche Beleuchtung der Oberfläche des Lampenschirms sicherstellt.

5. Uhr nach einem der Ansprüche 1 bis 4,
**dadurch gekennzeichnet,**
**dass** das Federuhrwerk einen automatischen elektrischen Aufzug mit der Anzeige des aktuellen Wochentags aufweist.

6. Uhr nach einem der Ansprüche 1 bis 5,
**dadurch gekennzeichnet,**
**dass** das Uhrwerk eine Start- und Stoppeinrichtung sowie ein Funkgerät aufweist, das die Signale der genauen Zeit empfängt, um den Gang der Uhr gemäß den Signalen automatisch zu korrigieren.
